# EUROPÄISCHE PATENTANMELDUNG

(11) **EP 1 800 950 A2**
(43) Veröffentlichungstag der Anmeldung: **27.06.2007**
(21) Anmeldenummer: 06124373.9
(22) Anmeldetag: 20.11.2006
(51) Int. Cl.: B60Q 5/00

(54) **Verfahren und Vorrichtung zur Zuordnung von einem akustischen Signal und/oder Tonfolge zu einem Fahrzeugereignis**

(30) Priorität: 23.12.2005 DE 102005062124
(71) Anmelder: ROBERT BOSCH GMBH, 70442 Stuttgart (DE)
(72) Erfinder: Schmied, Martin, 71642 Neckarweihingen (DE); Henne, Ralf, 74343 Sachsenheim (DE)

(57) **Zusammenfassung**

Es wird ein Verfahren zur Zuordnung von wenigstens einem akustischen Signal und/oder wenigstens einer Tonfolge zu wenigstens einem Fahrzeugereignis vorgeschlagen, das dazu dient, Aktionen des Fahrers und/oder Reaktionen des Fahrzeuges dem Benutzer durch eine akustische Ausgabeeinheit wiederzugeben, wobei eine Recheneinheit (2) die Fahrzeugereignisse ermittelt und diesen durch den Benutzer gewählte akustische Signale und/oder Tonfolgen zugeordnet werden.

## Beschreibung

### Stand der Technik

Die Erfindung geht aus von einem Verfahren zur Zuordnung von wenigstens einem akustischen Signal und/oder wenigstens einer Tonfolge zu wenigstens einem Fahrzeugereignis nach der Gattung des Hauptanspruchs. Es ist schon ein Verfahren und ein System für eine Warneinrichtung für ein Kraftfahrzeug aus der DE 198 43 564 A1 bekannt, wobei ein Fahrzeug mit Sensoren ausgestattet ist, mit denen ein Hindernis beim Rückwärtsfahren erfasst werden kann und wobei die Entfernung zum erfassten Hindernis dem Fahrer mitgeteilt wird. Hierbei werden zwei unterschiedliche Signale, ein Nahbereichswarnsignal und ein Fernbereichswarnsignal, ausgegeben. Die Warnsignale können zum Beispiel beide akustische Signale sein. Diese akustischen Signale werden durch eine Signalgebersteuereinheit erzeugt, können jedoch nicht vom Fahrer gewählt werden.

### Vorteile der Erfindung

Das erfindungsgemäße Verfahren mit den Merkmalen des Hauptanspruchs hat dem gegenüber den Vorteil, dass der Benutzer ein wählbares akustisches Signal und/oder eine Tonfolge einem Fahrzeugereignis zuordnen kann. Das Fahrzeugereignis kann hierbei durch eine Aktion des Fahrers und/oder durch eine Reaktion des Fahrzeugs hervorgerufen werden. Eine Aktion des Fahrers, z.B. das Betätigen eines Wahlschalters im Fahrzeug beispielsweise der Heckscheibenheizung, der Klimaautomatik, der Fensterheber oder der Zentralverriegelung, sowie das Betätigen eines Einstellmechanismus, beispielsweise dem Gaspedal, des Tempomats oder der Scheibenwischergeschwindigkeit, rufen im Fahrzeug ein dementsprechendes Ereignis hervor. Diesem Ereignis, beispielsweise dem Auslösen des Abtauens der Heckscheibe, wird ein akustisches Signal und/oder eine Tonfolge zugeordnet und bei dem Auftreten des Ereignisses der akustischen Ausgabeeinheit zugeführt. Somit bietet die Zuordnung eines akustischen Signals und/oder eine Tonfolge zu einem Fahrzeugereignis dem Fahrer und/oder dem Benutzer den Vorteil, dass dieser bei dem Eintreten des Fahrzeugereignisses und der daraus folgenden akustischen Ausgabe ohne Blick auf die Armatur und/oder auf die dementsprechende Signallampe das Fahrzeugereignis einer Funktion des Fahrzeugs zuordnen kann. Ebenso kann einem Fahrzeugereignis, das durch eine Reaktion des Fahrzeugs hervorgerufen wird, ein akustisches Signal und/oder eine Tonfolge zugeordnet werden. Eine Reaktion des Fahrzeugs tritt dann auf, wenn beispielsweise das ESP (=Elektronisches Stabilitätsprogramm) eingereift, das ABS (=Antiblockiersystem) aktiviert wird, der Ölmessstabsensor einen zu geringen Ölstand anzeigt oder Kühlerflüssigkeit nachgefüllt werden muss. Somit kann dem Fahrer und/oder dem Benutzer nach dem Eintreten eines Fahrzeugereignisses, hervorgerufen durch eine Reaktion des Fahrzeugs, ein akustisches Signal und/oder eine Tonfolge zu Gehör gebracht werden.

Als weiterer Vorteil ist anzusehen, dass die akustische Ausgabeeinheit in ein Audiosystem des Fahrzeugs integriert werden kann und/oder neben dem Fahrzeuginternen Audiosystem separat angeordnet werden kann. Somit kann das Audiosystem in einem Fahrzeug mit einer Zusatzfunktion ausgeführt werden, dass das erfindungsgemäße Verfahren beinhaltet, ohne dass ein zusätzliches Gerät benötigt wird.

Weiterhin ist vorteilhaft, dass die akustischen Signale und/oder Tonfolgen, z.B. Melodien oder Lieder aus Hitparaden, in der Datenbank nichtflüchtig gespeichert werden. Hierdurch wird einerseits kein weiteres separates Speichermedium benötigt und andererseits bietet es dem Fahrer und/oder dem Benutzer den Vorteil, dass dieser nun mehr als die benötigten akustischen Signale und/oder die Tonfolgen für die Zuordnung zu Fahrzeugereignissen in der Datenbank speichern kann. Somit kann der Fahrer und/oder der Benutzer bei einer erneuten Zuordnung eines akustischen Signals und/oder einer Tonfolge zu einem Fahrzeugereignis aus bereits gespeicherten akustischen Signalen und/oder Tonfolgen für die Zuordnung zu den Fahrzeugereignissen auswählen, ohne dass eine erneute Übertragung eines akustischen Signals und/oder einer Tonfolge in die Datenbank erforderlich ist. Besonders vorteilhaft ist hierbei, dass die Daten über eine Schnittstelle übertragen werden können und der Benutzer somit für seinen Geschmack akustische Signale und/oder Tonfolgen, beispielsweise auch eine Anpassung der Änderungen der Hitparade, in einem Speicher der Datenbank speichern kann.

Weiterhin ist vorteilhaft, dass mehr als die benötigten akustischen Signale und/oder Tonfolgen für die Zuordnung zu den gewünschten Fahrzeugereignissen in einem Speicher der Datenbank gespeichert werden können. Somit bietet es dem Fahrer und/oder Benutzer den Vorteil, dass er zu jeder Zeit eine Änderung an der Zuordnung von akustischen Signalen und/oder Tonfolgen zu Fahrzeugereignissen vornehmen kann, ohne eine erneute Übertragung von akustischen Signalen und/oder Tonfolgen über die Schnittstelle durchführen zu müssen.

Weiterhin ist vorteilhaft, dass der Benutzer über eine Bedieneinheit die Ausgabeparameter, z.B. die Lautstärke der Signale und/oder der Tonfolgen, sowie die Zuordnung der akustischen Signale und/oder der Tonfolgen zu wenigstens einem Fahrzeugereignis zuordnen kann und diese jederzeit vom Benutzer korrigiert werden können. Vorteilhaft ist hierbei, dass die Einstellung der Ausgabeparameter als auch die Zuordnung der akustischen Signale und/oder die Tonfolgen in der Datenbank gespeichert werden können und somit bis zu einer Änderung der Einstellung, ohne Aktivierung der Zuordnung der akustischen Signale und/oder Tonfolgen zu den gewählten Fahrzugereignissen, die akustischen Signale und/oder Tonfolgen bei einem Auftreten eines Fahrzeugereignisses über die akustische Ausgabeeinheit ausgegeben werden.

Weiterhin ist vorteilhaft, dass die gewählten akustischen Ausgabeparameter und die gewählte Zuordnung von einem akustischen Signal und/oder einer Tonfolge zu einem Fahrzeugereignis personifiziert gespeichert werden können. Dies bietet den Vorteil, dass für mehrere Benutzer oder nach Laune eines Benutzers für ein Fahrzeug, die dementsprechende Zuordnung der akustischen Signale und/oder die Tonfolge zu Fahrzeugereignissen und den zugehörigen Ausgabeparametern, personenbezogen gespeichert und abgerufen werden können.

Ein weiterer Vorteil ist, dass ein Teil oder die gesamten gespeicherten Daten über eine Schnittstelle ausgelesen und übertragen werden können. Vorteilhaft ist hierbei, dass ein Benutzer ein oder mehrere Einstellungen der Ausgabeparameter und/oder die Zuordnungen der akustischen Signale und/oder der Tonfolgen zu Fahrzeugereignissen an andere Fahrzeuge, welche mit diesem System ausgerüstet sind, übertragen kann und somit die Einstellungen bzw. die Zuordnungen für den Benutzer auch in einem anderen Fahrzeug gleich bleiben.

Weiterhin ist vorteilhaft, dass den Fahrzeugereignissen vom Benutzer wählbare akustische Signale und/oder Tonfolgen zugeordnet werden und somit bei einer Aktion des Fahrers und der damit verbundenen Reaktion des Fahrzeugs zugeordnete akustische Signale und/oder Tonfolgen über die Ausgabeeinheit ausgegeben werden. Diese Zuordnung kann z.B. eine Überlagerung der tatsächlichen Motorgeräusche sein, indem durch eine Aktion des Fahrers, z.B. eine Betätigung des Gaspedals, und der Reaktion des Fahrzeugs, z.B. eine Erhöhung der Motordrehzahl, ein drehzahlabhängiges, gespeichertes, akustisches Signal und/oder eine Tonfolge der akustischen Ausgabeeinheit zugeführt werden. Dies bietet den Vorteil, dass dem Fahrer eines z.B. kleinen Fahrzeugs mit schwächerem Motor ein Motorgeräusch eines kernig, sportlich klingenden Motors zugeführt wird und somit der Fahrspaß des Benutzers steigt.

Weiterhin ist vorteilhaft, dass die Ursache einer Reaktion des Fahrzeuges, z.B. ein Schalten auf die Tank Reserve, ohne auf die dementsprechende Warnlampe oder Warnanzeige zu sehen, durch das zugeordnete akustische Signal und/oder der Tonfolge sehr schnell zugeordnet werden kann. Durch die von dem Benutzer einstellbaren akustischen Signale und/oder Tonfolgen mit den Ausgabeparametern zu Fahrzeugereignissen kann nach Schwere der Ursache eine akustische Abstufung erfolgen. Diese kann die Reaktionszeit des Benutzers zum Handeln vorgeben und hat somit eine erhöhte Verkehrssicherheit zur Folge.

Besonders vorteilhaft ist, dass die Recheneinheit an einen bestehenden Datenbus, auf dem alle Fahrzeugereignisse abrufbar sind, im Fahrzeug angeschlossen werden kann und das zugeordnete Signal und/oder die Tonfolge zu einer Aktion des Fahrers oder zu der Reaktion des Fahrzeugs der akustischen Ausgabeeinheit weitergegeben wird. Somit bietet das Abrufen von Fahrzeugereignissen über den bestehenden Datenbus den Vorteil, dass keine separaten Kabelstränge zum Erfassen der Fahrzeugereignisse erforderlich sind und auch keine separaten Fahrzeugsensoren zur Erfassung von Fahrzeugereignissen am Fahrzeug angebracht werden müssen.

### Zeichnung

Ausführungsbeispiele der Erfindung sind in der Zeichnung dargestellt und in der nachfolgenden Beschreibung näher erläutert. Es zeigen
- Figur 1: eine Vorrichtung zur Durchführung des Verfahrens nach einem der vorhergehenden Ansprüche,
- Figur 2: das Zusammenwirken der Recheneinheit mit einer Datenbank und möglichen Fahrzeugereignissen zur Durchführung des erfindungsgemäßen Verfahrens.

### Beschreibung des Ausführungsbeispiels

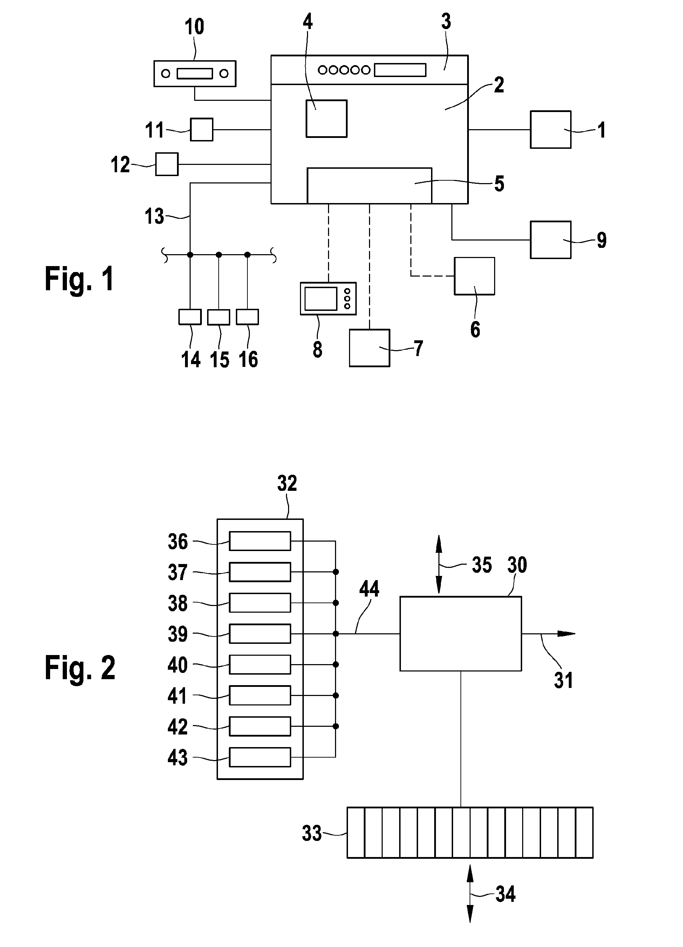

Figur 1 zeigt eine Recheneinheit 2 mit einer Datenbank 4 und einer Schnittstelle 5, die mit verschiedenen Einheiten zur Datenerfassung und Datenübertragung verbunden ist. An der Recheneinheit 2 ist ein integriertes Bedienelement 3 angeordnet. In einer weiteren Ausführungsform kann die Bedienung über ein externes Bedienelement 8, über ein Mobiltelefon 6 oder über einen Computer 7 erfolgen, beispielsweise einem PDA (= Personal Digital Assistant) oder einem Notebook. Als ein weiteres Bedienelement kann in einem weiteren Ausführungsbeispiel ein Radio oder ein Navigationssystem 10 dienen, das an die Recheneinheit 2 angeschlossen ist. Ein Datenbus 13, welcher verschiedene Informationen zu Fahrzeugereignissen überträgt, ist an die Recheneinheit 2 angeschlossen. Der Datenbus 13 überträgt beispielsweise Informationen zu ABS (=Antiblockiersystem) 14, ESP (=Elektronisches Stabilitätsprogramm) 15 und zu ASR (=Antischlupfregelung) 16 und ist mit der jeweiligen Sensorik im Fahrzeug verbunden. In einem weiteren Ausführungsbeispiel ist an der Recheneinheit 2 ein Geschwindigkeitssensor 11, ein Drehzahlsensor 12, eine Ausgabeeinheit 1 und eine Personenidentifikationseinheit 9 angeschlossen.

Die Recheneinheit 2 mit der Datenbank 4 und der Schnittstelle 5 ist in einem bevorzugten Ausführungsbeispiel in einem bestehenden Audiosystem, z.B. in einem Radio oder Navigationssystem 10, integriert oder als ein separates System in einem Fahrzeug angeordnet. Die Recheneinheit 2 erfasst hierbei die Informationen zu Fahrzeugereignissen aus dem Datenbus 13. Fahrzeugereignisse können nach einer Aktion des Fahrers oder nach einer Reaktion des Fahrzeugs auftreten. Die Fahrzeugereignisse werden nach einer Aktion des Fahrers und/oder des Benutzers, beispielsweise einer Aktivierung der Heckscheibenheizung, der Klimaautomatik, des Innenraumlichts, des Abblendlichts, des Fernlichts, des Blinkers oder des Fensterhebers, aus dem Datenbus 13 mit Hilfe der Recheneinheit 2 erfasst. Ferner werden über den Datenbus 13 Reaktionen des Fahrzeugs erfasst, z.B. Warnmeldungen wie Ölstand, Reifendruck, Handbremsenbetätigung, Sicherheitsgurte, Türverriegelung, ESP (=Elektronisches Stabilitätsprogramm), ASR (=Antischlupfregelung), ABS (=Antiblockiersystem) oder Tankreserve. In einem weiteren Ausführungsbeispiel werden Fehlermeldungen nach einer Reaktion des Fahrzeugs über den Datenbus 13 erfasst, beispielsweise Fehlermeldungen des Rückhaltesystems wie z.B. "ABS defekt" oder "Airbag defekt".

In der Datenbank 4 sind in einem bevorzugten Ausführungsbeispiel akustische Signale, z.B. intermittierende akustische Signale in verschiedenen Tonstufen, und/oder akustische Tonfolgen, z.B. Melodien, Lieder oder gesprochene Texte, gespeichert. Über das integrierte Bedienelement 3 werden den Fahrzeugereignissen, welche mit Hilfe der Recheneinheit 2 über den Datenbus 13 ermittelt wurden, in der Datenbank 4 nach einem Benutzerwunsch die akustischen Signalen und/oder Tonfolgen zugeordnet. Hierbei können den Fahrzeugereignissen ein oder mehrere akustische Signale und/oder Tonfolgen zugeordnet werden. Ebenso kann in einem weiteren Ausführungsbeispiel ein akustisches Signal und/oder Tonfolge einem oder mehreren Fahrzeugereignissen zugeordnet werden. Nachdem ein Fahrzeugereignis aufgetreten ist und mit Hilfe der Recheneinheit 2 aus dem Datenbus 13 erfasst wurde, wird das zugeordnete akustische Signal und/oder die Tonfolge der Ausgabeeinheit 1 zugeführt. Die Ausgabeeinheit 1 stellt in einem bevorzugten Ausführungsbeispiel das Audiosystem in einem Fahrzeug dar. In einem weiteren Ausführungsbeispiel kann die Ausgabeeinheit 1 durch einen Aktivlautsprecher, ein Lautsprechersystem oder einen integrierten Lautsprecher eines Navigationssystems, ausgeführt werden. Ein Aktivlautsprecher stellt einen und/oder mehrere Lautsprecher mit einem integrierten Audioverstärker dar. Ein Lautsprechersystem umfasst einen und/oder mehrere Lautsprecher mit einem separat angeordneten Audioverstärker.

Über das vorzugsweise integrierte Bedienelement 3 erfolgt die Zuordnung der gewählten Fahrzeugereignisse zu gespeicherten und/oder übertragbaren akustischen Signalen und/oder Tonfolgen durch den Benutzer. Die akustischen Signale und/oder Tonfolgen können in einer Ausführungsform über die Schnittstelle 5 und/oder durch externe Datenträger der Datenbank 4 zugeführt werden. Hierbei bietet die Schnittstelle 5 die Möglichkeit, Daten aus der Datenbank 4 zu übertragen. Die Schnittstelle 5 bietet in einem bevorzugten Ausführungsbeispiel die Möglichkeit einer drahtlosen Datenübertragung, einer drahtgebundenen Datenübertragung und/oder einer Datenübertragung durch Datenträgerlaufwerke.

Durch das integrierte Bedienelement 3 können die Ausgabeparameter, welche über die Ausgabeeinheit 1 ausgegeben werden, eingestellt werden. Hierbei besteht die Möglichkeit die Audioparameter, vorzugsweise die Lautstärke, der zugeordneten akustischen Signale und/oder der Tonfolgen zu Fahrzeugereignissen zu variieren.

Ferner besteht die Möglichkeit in einem weiteren Ausführungsbeispiel über eine Personenidentifikationseinheit 9 personifizierte Daten, z.B. benutzerspezifische akustische Signale und/oder Tonfolgen, gewünschte Fahrzeugereignisse, eine eingestellte Zuordnungstabelle der akustischen Signale und/oder Tonfolgen zu Fahrzeugereignissen und/oder die Ausgabeparameter, zu aktivieren. Dies kann durch einen und/oder mehrere codierte Schlüssel und/oder durch eine personifizierte Speicherkarte erfolgen. Personifizierte Speicherkarten können beispielsweise Kreditkarten, Kundenkarten oder die SIM-Karte des Mobilfunks sein. In einem Ausführungsbeispiel erfolgt die Aktivierung der personifizierten Einstellungen über das Erkennen des Mobiltelefons in einem Fahrzeug, beispielsweise über Bluetooth. In einem weiteren Ausführungsbeispiel können durch die codierten Schlüssel und/oder die personifizierten Speicherkarten personenspezifische Daten übertragen und in einem oder mehreren Fahrzeugen verwendet werden.

In einem weiteren Ausführungsbeispiel werden die Fahrzeugereignisse direkt erfasst, ohne die Fahrzeugereignisse aus dem Datenbus 13 zu ermitteln. Hierfür wird für die Erfassung des gewünschten Fahrzeugereignisses, beispielsweise die Fahrzeuggeschwindigkeit oder die Motordrehzahl, der jeweilige Sensor, vorzugsweise der Geschwindigkeitssensor 11 oder der Drehzahlsensor 12, über eine Datenleitung mit der Recheneinheit 2 verbunden. Ebenso besteht die Möglichkeit, die entsprechenden Signallampen und/oder Anzeigen für die Fahrzeugereignismeldungen über eine Datenleitung mit der Recheneinheit 2 zu verbinden. Somit können Fahrzeugereignisse von Fahrzeugen ohne kompatiblen Datenbus oder zusätzliche Fahrzeugereignisse, die nicht im Datenbus abrufbar sind, erfasst werden und den ermittelten Fahrzeugereignissen akustische Signale und/oder Tonfolgen zugeordnet werden.

In der Figur 2 ist ein erfindungsgemäßes Verfahren dargestellt. In einem ersten Ausführungsbeispiel werden die Fahrzeugereignisse 32, vorzugsweise das Fahrzeugereignis "Licht an" 36, Fahrzeugereignis "ESP aktiv" 37, "ABS aktiv" 38, "ASR aktiv" 39, "Tank auf Reserve" 40, "Lampe defekt" 41, "Blinker an" 42 oder "Motordrehzahl" 43, über den Datenbus 44 von der Recheneinheit 30 erfasst. In der Datenbank 33 sind akustische Signale und/oder Tonfolgen gespeichert und können über das Bedienelement 3 und der Datenleitung 34 den Fahrzeugereignissen zugeordnet werden. Des Weiteren können über die Datenleitung 34 von einer externen Datenquelle, beispielsweise einem MP3-Player, akustische Signale und/oder Tonfolgen in die Datenbank 33 übertragen und dort nichtflüchtig gespeichert werden. Über das Bedienelement 3 kann die Zuordnung der Fahrzeugereignisse zu den akustischen Signalen und/oder Tonfolgen erfolgen und somit eine Zuordnungstabelle erstellt werden, die in einem Speicher der Datenbank 33 abgelegt wird. In der Zuordnungstabelle wird jedem gewünschten Fahrzeugereignis wenigstens ein akustisches Signal und/oder eine Tonfolge zugeordnet und über die Recheneinheit 30 bei Auftreten des gewählten Fahrzeugereignisses der akustischen Ausgabeeinheit 1 über die Datenleitung 31 zugeführt.

In einem weiteren Ausführungsbeispiel können Fahrzeugereignisse direkt mit der Datenbank 33 über die Datenleitung 34 erfasst und zugeordnet werden und über die Recheneinheit 30 und die Datenleitung 31 an die Ausgabeeinheit 1 weitergeleitet werden. Ebenso besteht die Möglichkeit die akustische Ausgabeeinheit 1 direkt an die Datenbank 33 anzuschließen.

In der Zuordnungstabelle der Datenbank 33 besteht die Möglichkeit einem oder mehreren Fahrzeugereignissen dasselbe akustische Signal und/oder dieselbe Tonfolge zuzuordnen. In einem weiteren Ausführungsbeispiel können über die Datenleitung 34 und der Schnittstelle 5 Daten der Zuordnungstabelle übertragen und in einem weiteren Fahrzeug verwendet und insbesondere personenspezifisch zugeordnet werden. Die Ausgabeparameter werden über das Bedienelement 3 eingestellt und in der Zuordnungstabelle jeder Zuordnung beigefügt. Hierbei wird vorzugsweise die auszugebende Lautstärke der akustischen Signale und/oder Tonfolgen jedem gewählten Fahrzeugereignis 32 zugeordnet und in der Datenbank 33 gespeichert.

In einem weiteren Ausführungsbeispiel kann die Recheneinheit 30 über den Datenbus 44 Reaktionen des Fahrzeugs, vorzugsweise die Motordrehzahl, erfassen und die in einer Datenbank 33 gespeicherten akustischen drehzahlabhängigen Signalen und/oder Tonfolgen zuordnen. Dies bietet die Möglichkeit dem tatsächlichen Motorgeräusch ein sportlich kerniges Motorgeräusch zu überlagern und dem Fahrer über die Ausgabeeinheit 1 wiederzugeben.

In einem weiteren Ausführungsbeispiel besteht die Möglichkeit den Fahrzeugfunktionen, vorzugsweise dem Blinkergeräusch, bei Betätigung der Handbremse oder bei Betätigung der Kupplung, ein wählbares akustisches Signal und/oder eine Tonfolge zuzuordnen, wobei das akustische Signal und/oder die Tonfolge in einer wählbaren akustischen Intensität der Ausgabeeinheit 1 über die Datenleitung 31 zugeführt wird. So kann dem aktivierten Blinker beispielsweise eine akustische Textmeldung "blinkt_blinkt nicht_blinkt_blinkt nicht_ ..."oder der betätigten Handbremse die akustische Textmeldung "ich halte_ich halte_ich halte_ ..."zugeordnet werden und durch die Ausgabeeinheit 1 ausgegeben werden.

In einer weiteren Ausführung kann beispielsweise bei einer Außentemperatur von weniger als einem Grad-Celsius das Lied "Leise rieselt der Schnee" dem Fahrer und/oder dem Benutzer zu Gehör gebracht werden und gibt somit die Information von Glatteisgefahr.

In einem weiteren Ausführungsbeispiel kann ein Signalton in Abhängigkeit von der Kupplungspedalstellung in unterschiedlicher akustischer Intensität der Ausgabeeinheit zugeführt werden.

In einem weiteren Ausführungsbeispiel kann die Recheneinheit 30 über den Datenbus 44 die Geschwindigkeit des Fahrzeuges erfassen und einem akustischen Signal und/oder einer Tonfolge aus der Datenbank 33 zuordnen und diese der Ausgabeeinheit 1 über die Datenleitung 31 zuführen. Somit wird der Fahrer bei dem Erreichen einer maximal zulässigen Geschwindigkeit und/oder in der Datenbank 33 hinterlegten Geschwindigkeitsgrenze darauf aufmerksam gemacht, dass diese überschritten wird und/oder beispielsweise ein Trauermarsch "Durch Hain und Flur" ausgegeben, der den Fahrer und/oder Benutzer auf die Konsequenzen bei einem Unfall mit überhöhter Geschwindigkeit hinweist.

## Patentansprüche

1. Verfahren zur Zuordnung von wenigstens einem akustischen Signal und/oder wenigstens einer Tonfolge zu wenigstens einem Fahrzeugereignis, wobei ein Auftreten des wenigstens einen Fahrzeugereignisses von einer Recheneinheit ermittelt wird,
**dadurch gekennzeichnet, dass**
das wenigstens eine akustische Signal und/oder die wenigstens eine Tonfolge durch einen Benutzer wählbar dem wenigstens einen Fahrzeugereignis zur Ausgabe über eine akustische Ausgabeeinheit des Fahrzeugs bei dem Auftreten des Fahrzeugereignisses zugeordnet wird.

2. Verfahren nach Anspruch 1,
**dadurch gekennzeichnet, dass**
das wenigstens eine akustische Signal und/oder die wenigstens eine Tonfolge in einer Datenbank nicht flüchtig gespeichert wird und/oder über wenigstens eine Schnittstelle übertragen wird.

3. Verfahren nach einem der vorangegangenen Ansprüche,
**dadurch gekennzeichnet, dass**
Ausgabeparameter und/oder die gewählte Zuordnung von wenigstens einem akustischen Signal und/oder wenigstens einer Tonfolge zu wenigstens einem Fahrzeugereignis über ein Bedienelement eingestellt und/oder nicht flüchtig in der Datenbank gespeichert werden.

4. Verfahren nach einem der vorangegangenen Ansprüche,
**dadurch gekennzeichnet, dass**
die gewählten akustischen Ausgabeparameter und/oder die gewählte Zuordnung von wenigstens einem akustischen Signal und/oder wenigstens einer Tonfolge zu wenigstens einem Fahrzeugereignis personifiziert nicht flüchtig gespeichert und/oder übertragen werden.

5. Verfahren nach einem der vorangegangenen Ansprüche,
**dadurch gekennzeichnet, dass**
einem Fahrzeugereignis wenigstens ein drehzahlabhängiges akustisches Signal und/oder wenigstens eine Tonfolge, vorzugsweise ein übertragenes und/oder gespeichertes Motorgeräusch, zur akustischen Ausgabeeinheit des Fahrzeugs bei dem Auftreten des Fahrzeugereignisses zugeordnet wird.

6. Vorrichtung zur Zuordnung von wenigstens einem akustischen Signal und/oder wenigstens einer Tonfolge zu wenigstens einem Fahrzeugereignis in einem Fahrzeug, aufweisend eine Recheneinheit (2; 30) zur Ermittlung von Fahrzeugereignissen (32), **gekennzeichnet durch** eine Datenbank (4; 33) zur Zuordnung von wenigstens einem, von einem Benutzer über ein Bedienelement (3; 6; 7; 8; 10) wählbaren, akustischen Signal und/oder wenigstens einer Tonfolge zu wenigstens einem Fahrzeugereignis zur Ausgabe über eine akustische Ausgabeeinheit (1) bei einem Auftreten des Fahrzeugereignisses.

7. Vorrichtung nach Anspruch 6, **gekennzeichnet durch** wenigstens eine Schnittstelle (5) zur Übertragung von wenigstens einem Signal und/oder wenigstens einer Tonfolge und/oder von Daten der Recheneinheit (2; 30) und/oder der Datenbank (4; 33) von und/oder zu wenigstens einem externen Datenträger (6; 7; 10).

8. Vorrichtung nach einem der Ansprüche 6-7, **gekennzeichnet durch** ein Bedienelement (3; 6; 7; 8; 10) zur Einstellung von Ausgabeparameter und/oder der Zuordnung von wenigstens einem akustischen Signal und/oder wenigstens einer Tonfolge zu wenigstens einem Fahrzeugereignis.

9. Vorrichtung nach einem der Ansprüche 6-8, **gekennzeichnet durch** einen Anschluss der Recheneinheit (2; 30) an einen Datenbus (13; 44) zur Ermittlung der Fahrzeugereignisse (32).

10. Vorrichtung nach einem der Ansprüche 6-9, **gekennzeichnet durch** einen Speicher in der Datenbank (4; 33) zur Speicherung von wenigstens einem akustischen Signal und/oder wenigstens einer Tonfolge und/oder von Daten der Einstellung von Ausgabeparameter und/oder der Zuordnung von wenigstens einem akustischen Signal und/oder wenigstens einer Tonfolge zu wenigstens einem Fahrzeugereignis.

11. Vorrichtung nach einem der Ansprüche 6-10, **gekennzeichnet durch** eine Personenidentifikationseinheit (9) zur Zuordnung des wenigstens einen akustischen Signals und/oder der wenigstens einen Tonfolge zu wenigstens einem Fahrzeugereignis abhängig von der Person.
